# EUROPÄISCHE PATENTSCHRIFT

(11) **EP 3 365 211 B1**
(45) Veröffentlichungstag und Bekanntmachung des Hinweises auf die Patenterteilung: **21.02.2024**
(21) Anmeldenummer: 16770738.9
(22) Anmeldetag: 20.09.2016
(51) Int. Cl.: B60W 30/06, B60W 30/09, B60W 30/095, B60W 50/00, G08G 1/16, G05D 1/00, B62D 15/02

(54) **VERFAHREN UND VORRICHTUNG ZUM VERRINGERN EINES KOLLISIONSRISIKOS EINER KOLLISION EINES KRAFTFAHRZEUGS MIT EINEM OBJEKT**
METHOD AND DEVICE FOR REDUCING THE RISK OF COLLISION OF A MOTOR VEHICLE WITH AN OBJECT
PROCÉDÉ ET DISPOSITIF POUR RÉDUIRE LE RISQUE DE COLLISION D'UN VÉHICULE À MOTEUR AVEC UN OBJET

(30) Priorität: 22.10.2015 DE 102015220646
(43) Veröffentlichungstag der Anmeldung: 29.08.2018
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2016/072275
(87) Internationale Veröffentlichungsnummer: WO 2017/067729

(56) Entgegenhaltungen:
- EP-A1- 2 330 434
- DE-A1-102006 044 803
- DE-A1-102012 015 968
- DE-A1-102012 111 846
- JP-A- 2012 234 408
- US-A1- 2006 293 856

## Beschreibung

Die Erfindung betrifft ein Verfahren und eine Vorrichtung zum Verringern eines Kollisionsrisikos einer Kollision eines Kraftfahrzeugs mit einem Objekt. Die Erfindung betrifft ferner ein Kraftfahrzeug, einen Parkplatz sowie ein Computerprogramm.

### Stand der Technik

Die Offenlegungsschriften JP2012234408A und DE 10 2012 111 846 A1 zeigen ein Kollisionsschutzverfahren und ein Kollisionsschutzssystem.

Die Offenlegungsschrift EP 2 330 434 A1 zeigt ein Sicherheitssystem für ein Fahrzeug.

Die Offenlegungsschrift DE 10 2006 044 803 A1 zeigt ein Kraftfahrzeug mit einer Einrichtung zur Unterstützung des Fahrers beim Einparken.

Die Offenlegungsschrift US 2006/293856 A1 zeigt ein Sensorsystem eines Fahrzeugs.

Die Offenlegungsschrift DE 10 2012 222 562 A1 zeigt ein System für bewirtschaftete Parkflächen zur Überführung eines Fahrzeugs von einer Startposition in eine Zielposition.

Bei einem solchen Überführen ist es wichtig, dass das Fahrzeug nicht mit Objekten, zum Beispiel Personen oder weiteren Fahrzeugen, kollidiert.

### Offenbarung der Erfindung

Die der Erfindung zugrundeliegende Aufgabe ist darin zu sehen, ein effizientes Konzept zum effizienten Verringern eines Kollisionsrisikos einer Kollision eines Kraftfahrzeugs mit einem Objekt bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Verringern eines Kollisionsrisikos einer Kollision eines fahrenden Kraftfahrzeugs mit einem Objekt bereitgestellt, umfassend die folgenden Schritte:
- Bestimmen eines ersten Sicherheitsbereichs, der einen ersten abgegrenzten Teilbereich eines momentanen Umfelds des fahrenden Kraftfahrzeugs festlegt,
- Bestimmen eines zweiten Sicherheitsbereichs, der einen zweiten abgegrenzten Teilbereich des momentanen Umfelds des fahrenden Kraftfahrzeugs festlegt, wobei der zweite Teilbereich zum Kraftfahrzeug weiter beabstandet ist als der erste Teilbereich,
- Überwachen des ersten und des zweiten Teilbereichs auf ein sich in den jeweiligen Sicherheitsbereich bewegendes Objekt und/oder auf ein sich innerhalb des jeweiligen Sicherheitsbereichs befindliches Objekt,
- Steuern eines Anhaltens des Kraftfahrzeugs, wenn die Überwachung ergeben hat, dass sich ein Objekt innerhalb des ersten Sicherheitsbereichs befindet, um das Kraftfahrzeug anzuhalten, und
- Steuern einer Durchführung einer oder mehrerer der folgenden Sicherheitsaktionen, wenn die Überwachung ergeben hat, dass sich ein Objekt innerhalb des zweiten Sicherheitsbereichs befindet: Reduzieren einer momentanen Kraftfahrzeuggeschwindigkeit, Vorbereiten einer Bremsanlage des Kraftfahrzeugs auf eine Bremsung, Überprüfen der durchgeführten Überwachung des zweiten Sicherheitsbereichs,
- wobei bei einer Detektion eines sich innerhalb des zweiten Sicherheitsbereichs befindlichen Objekts eine Bewegung des detektierten Objekts prädiziert wird, wobei die eine oder die mehreren Sicherheitsaktionen nur dann durchgeführt werden, wenn die Prädiktion ergeben hat, dass sich das detektierte Objekt dem Kraftfahrzeug nähern wird und/oder sich in den ersten Sicherheitsbereich bewegen wird.

Gemäß einem weiteren Aspekt wird eine Vorrichtung zum Verringern eines Kollisionsrisikos einer Kollision eines fahrenden Kraftfahrzeugs mit einem Objekt bereitgestellt, umfassend:
- eine Bestimmungseinrichtung zum Bestimmen eines ersten Sicherheitsbereichs, der einen ersten abgegrenzten Teilbereich eines momentanen Umfelds des fahrenden Kraftfahrzeugs festlegt, und
- zum Bestimmen eines zweiten Sicherheitsbereichs, der einen zweiten abgegrenzten Teilbereich des momentanen Umfelds des fahrenden Kraftfahrzeugs festlegt, wobei der zweite Teilbereich zum Kraftfahrzeug weiter beabstandet ist als der erste Teilbereich,
- eine Überwachungseinrichtung zum Überwachen des ersten und des zweiten Teilbereichs auf ein sich in den jeweiligen Sicherheitsbereich bewegendes Objekt und/oder auf ein sich innerhalb des jeweiligen Sicherheitsbereichs befindliches Objekt,
- eine Steuerungseinrichtung zum Steuern eines Anhaltens des Kraftfahrzeugs, wenn die Überwachung ergeben hat, dass sich ein Objekt innerhalb des ersten Sicherheitsbereichs befindet, um das Kraftfahrzeug anzuhalten, und
- zum Steuern einer Durchführung einer oder mehrerer der folgenden Sicherheitsaktionen, wenn die Überwachung ergeben hat, dass sich ein Objekt innerhalb des zweiten Sicherheitsbereichs befindet: Reduzieren einer momentanen Kraftfahrzeuggeschwindigkeit, Vorbereiten einer Bremsanlage des Kraftfahrzeugs auf eine Bremsung, Überprüfen der durchgeführten Überwachung des zweiten Sicherheitsbereichs,
- wobei eine Prädiktionseinrichtung vorgesehen ist, die ausgebildet ist, bei einer Detektion eines sich innerhalb des zweiten Sicherheitsbereichs befindlichen Objekts eine Bewegung des detektierten Objekts zu prädizieren, wobei die Steuerungseinrichtung ausgebildet ist, die eine oder die mehreren Sicherheitsaktionen nur dann durchzuführen, wenn die Prädiktion ergeben hat, dass sich das detektierte Objekt dem Kraftfahrzeug nähern wird und/oder sich in den ersten Sicherheitsbereich bewegen wird.

Nach einem anderen Aspekt wird ein Kraftfahrzeug bereitgestellt, welches die erfindungsgemäße Vorrichtung umfasst.

Nach einem anderen Aspekt wird ein Parkplatz für Kraftfahrzeuge bereitgestellt, wobei der Parkplatz die erfindungsgemäße Vorrichtung umfasst.

Nach noch einem Aspekt wird ein Computerprogramm bereitgestellt, welches Programmcode zur Durchführung des erfindungsgemäßen Verfahrens umfasst, wenn das Computerprogramm auf einem Computer ausgeführt wird.

Die Erfindung umfasst also insbesondere und unter anderem den Gedanken, zwei Sicherheitsbereiche im Kraftfahrzeugumfeld zu bestimmen oder zu definieren, die jeweils überwacht werden. Abhängig davon, wo sich ein detektiertes Objekt befindet, werden unterschiedliche Sicherheitsaktionen durchgeführt. So ist erfindungsgemäß vorgesehen, dass das Kraftfahrzeug angehalten wird, wenn sich ein Objekt innerhalb des ersten Sicherheitsbereichs befindet. Wenn sich ein Objekt innerhalb des zweiten Sicherheitsbereichs befindet, so wird eine respektive werden mehrere der folgenden Sicherheitsaktionen durchgeführt: Reduzieren einer momentanen Kraftfahrzeuggeschwindigkeit, Vorbereiten einer Bremsanlage des Kraftfahrzeugs auf eine Bremsung, Überprüfen der durchgeführten Überwachung des zweiten Sicherheitsbereichs.

Durch das Vorsehen eines zweiten Sicherheitsbereichs, der weiter beabstandet ist als der erste Sicherheitsbereich, kann in vorteilhafter Weise einer Kollision durch die erfindungsgemäß vorgesehenen Sicherheitsaktionen vorgebeugt werden. Wenn sich aber ein Objekt bereits im ersten Sicherheitsbereich befindet, so ist aus Sicherheitsgründen vorgesehen, dass stets das Kraftfahrzeug angehalten wird, um ein Kollisionsrisiko zu verringern respektive eine Unfallschwere im Fall einer Kollision zu verringern.

Somit wird also der technische Vorteil bewirkt, dass ein Kollisionsrisiko effizient verringert werden kann.

Durch das Vorsehen einer Überprüfung der durchgeführten Überwachung des zweiten Sicherheitsbereichs kann zum Beispiel der technische Vorteil bewirkt werden, dass eventuelle Fehler, die bei der durchgeführten Überwachung aufgetreten sind, erkannt werden können. Insbesondere kann dadurch der technische Vorteil bewirkt werden, dass dieses Mal die Überwachung speziell auf das Objekt bezogen durchgeführt wird.

Durch das Vorsehen, dass eine momentane Kraftfahrzeuggeschwindigkeit reduziert wird, wird insbesondere der technische Vorteil bewirkt, dass ein Kollisionsrisiko noch weiter effizient verringert werden kann. Insbesondere kann dadurch der technische Vorteil bewirkt werden, dass, sollte es zu einer Kollision kommen, aufgrund der reduzierten Kraftfahrzeuggeschwindigkeit eine Unfallschwere verringert werden kann.

Insbesondere das Vorbereiten der Bremsanlage des Kraftfahrzeugs auf eine Bremsung weist insbesondere den technischen Vorteil auf, dass eine Reaktionszeit der Bremsanlage, wenn ein Bremsmoment angefordert wird, effizient verringert ist. Dadurch kann in vorteilhafter Weise ein Bremsweg effizient verkürzt werden.

Gemäß einer weiteren Ausführungsform ist vorgesehen, dass die Durchführung eine Fernsteuerung der einen Sicherheitsaktion oder eine Fernsteuerung von einer oder mehreren der mehreren Sicherheitsaktionen umfasst und/oder dass das Kraftfahrzeug ferngesteuert angehalten wird.

Dadurch wird insbesondere der technische Vorteil bewirkt, dass das Kraftfahrzeug selbst nicht notwendigerweise dafür ausgebildet sein muss, autonom zu entscheiden, welche der Sicherheitsaktionen es durchführen soll. Denn dies wird kraftfahrzeugextern durchgeführt, das Kraftfahrzeug wird also ferngesteuert. Das Fernsteuern oder die Fernsteuerung umfasst insbesondere, dass Fernsteuerungsbefehle an das Kraftfahrzeug über ein Kommunikationsnetzwerk gesendet werden, ansprechend auf welche das Kraftfahrzeug die eine oder die mehreren Sicherheitsaktionen durchführen kann respektive durchführt.

So ist also nach einer Ausführungsform vorgesehen, dass das Kraftfahrzeug derart ferngesteuert wird, dass eine momentane Kraftfahrzeuggeschwindigkeit reduziert wird. Insbesondere ist nach einer Ausführungsform vorgesehen, dass das Kraftfahrzeug derart ferngesteuert wird, dass eine Bremsanlage des Kraftfahrzeugs auf eine Bremsung vorbereitet wird. Insbesondere ist nach einer Ausführungsform vorgesehen, dass das Kraftfahrzeug derart ferngesteuert wird, dass das Kraftfahrzeug anhält, also einen Notstopp durchführt. Das heißt also, dass das Kraftfahrzeug ferngesteuert angehalten wird.

In einer weiteren Ausführungsform ist vorgesehen, dass das Überwachen umfasst, dass Umfelddaten auf ein sich in den jeweiligen Sicherheitsbereich bewegendes Objekt und/oder ein sich innerhalb des jeweiligen Sicherheitsbereichs befindliches Objekt analysiert werden, wobei die Umfelddaten mittels eines oder mehrerer Umfeldsensoren bereitgestellt werden, die den jeweiligen Sicherheitsbereich erfasst haben, wobei der oder die Umfeldsensoren vom Kraftfahrzeug umfasst und/oder im Kraftfahrzeugumfeld des Kraftfahrzeugs angeordnet sind.

Dadurch wird insbesondere der technische Vorteil bewirkt, dass eine effiziente Umfeldanalyse des angepassten Sicherheitsbereichs durchgeführt werden kann. Sofern sowohl vom Kraftfahrzeug umfasste Umfeldsensoren als auch von im Kraftfahrzeugumfeld des Kraftfahrzeugs angeordnete Umfeldsensoren für die Umfeldanalyse verwendet werden, wird insbesondere der technische Vorteil bewirkt, dass eine hohe Redundanz erzielt werden kann.

Nach einer Ausführungsform umfasst das Überwachen, dass mittels eines oder mehrerer Umfeldsensoren (zum Beispiel des Kraftfahrzeugs und/oder des Parkplatzes) der jeweilige Sicherheitsbereich erfasst wird, um dem erfassten Sicherheitsbereich entsprechende Umfelddaten zu ermitteln, die dann für eine Umfeldanalyse bereitgestellt werden.

Nach einer Ausführungsform ist vorgesehen, dass die Vorrichtung zum Verringern eines Kollisionsrisikos einer Kollision eines Kraftfahrzeugs mit einem Objekt eingerichtet oder ausgebildet ist, das Verfahren zum Verringern eines Kollisionsrisikos einer Kollision eines Kraftfahrzeugs mit einem Objekt auszuführen oder durchzuführen.

Technische Funktionalitäten der Vorrichtung ergeben sich analog aus entsprechenden technischen Funktionalitäten des Verfahrens und umgekehrt.

Nach einer Ausführungsform ist vorgesehen, dass das Verfahren zum Verringern eines Kollisionsrisikos einer Kollision eines Kraftfahrzeugs mit einem Objekt mittels der Vorrichtung zum Verringern eines Kollisionsrisikos einer Kollision eines Kraftfahrzeugs mit einem Objekt ausgeführt oder durchgeführt wird.

Nach einer Ausführungsform ist der Umfeldsensor respektive sind die Umfeldsensoren Elemente aus der folgenden Gruppe von Umfeldsensoren: Radarsensor, Lidarsensor, Lasersensor, Videosensor, Ultraschallsensor, Magnetsensor, Infrarotsensor, Lichtschrankensensor.

Nach einer Ausführungsform umfasst die Vorrichtung einen oder mehrere Umfeldsensoren.

Nach einer Ausführungsform umfasst das Kraftfahrzeug einen oder mehrere Umfeldsensoren.

Nach einer Ausführungsform umfasst der Parkplatz einen oder mehrere Umfeldsensoren.

Nach einer Ausführungsform ist das Kraftfahrzeug ausgebildet oder eingerichtet, das erfindungsgemäße Verfahren aus- oder durchzuführen.

Gemäß einer weiteren Ausführungsform ist vorgesehen, dass der Parkplatz ausgebildet oder eingerichtet ist, das erfindungsgemäße Verfahren aus- oder durchzuführen.

Nach einer Ausführungsform ist eine Kommunikationsschnittstelle zur Kommunikation über ein Kommunikationsnetzwerk vorgesehen. Die Kommunikationsschnittstelle ist zum Beispiel vom Kraftfahrzeug umfasst. Die Kommunikationsschnittstelle ist zum Beispiel von der Vorrichtung umfasst. Die Kommunikationsschnittstelle ist zum Beispiel vom Parkplatz umfasst.

Nach einer Ausführungsform ist vorgesehen, dass bei einer Detektion eines sich innerhalb des zweiten Sicherheitsbereichs befindlichen Objekts eine Bewegung des detektierten Objekts prädiziert wird, wobei die eine oder die mehreren Sicherheitsaktionen nur dann durchgeführt werden, wenn die Prädiktion ergeben hat, dass sich das detektierte Objekt dem Kraftfahrzeug nähern wird und/oder sich in den ersten Sicherheitsbereich bewegen wird.

Dadurch wird insbesondere der technische Vorteil bewirkt, dass effizient bestimmt werden kann, ob sich ein innerhalb des zweiten Sicherheitsbereichs befindliches Objekt in den ersten Sicherheitsbereich bewegen wird.

Erfindungsgemäß ist eine Prädiktionseinrichtung vorgesehen, die ausgebildet ist, bei einer Detektion eines sich innerhalb des zweiten Sicherheitsbereichs befindlichen Objekts eine Bewegung des detektierten Objekts zu prädizieren, wobei die Steuerungseinrichtung ausgebildet ist, die eine oder die mehreren Sicherheitsaktionen nur dann durchzuführen, wenn die Prädiktion ergeben hat, dass sich das detektierte Objekt dem Kraftfahrzeug nähern wird und/oder sich in den ersten Sicherheitsbereich bewegen wird.

Nach einer anderen Ausführungsform ist vorgesehen, dass ein dritter Sicherheitsbereich bestimmt wird, der einen dritten abgegrenzten Teilbereich des momentanen Umfelds des Kraftfahrzeugs festlegt, wobei der dritte Teilbereich zum Kraftfahrzeug weiter beabstandet ist als der zweite Teilbereich, wobei der dritte Teilbereich auf ein sich in den dritten Sicherheitsbereich bewegendes Objekt und/oder auf ein sich innerhalb des dritten Sicherheitsbereichs befindliches Objekt überwacht wird, wobei die Durchführung der einen oder der mehreren der Sicherheitsaktionen abhängig von der Überwachung des dritten Sicherheitsbereichs durchgeführt wird.

Nach einer weiteren Ausführungsform ist vorgesehen, dass die Bestimmungseinrichtung ausgebildet ist, einen dritten Sicherheitsbereich zu bestimmen, der einen dritten abgegrenzten Teilbereich des momentanen Umfelds des Kraftfahrzeugs festlegt, wobei der dritte Teilbereich zum Kraftfahrzeug weiter beabstandet ist als der zweite Teilbereich, wobei die Überwachungseinrichtung ausgebildet ist, den dritten Teilbereich auf ein sich in den dritten Sicherheitsbereich bewegendes Objekt und/oder auf ein sich innerhalb des dritten Sicherheitsbereichs befindliches Objekt zu überwachen, wobei die Steuerungseinrichtung ausgebildet ist, die Durchführung der einen oder der mehreren der Sicherheitsaktionen abhängig von der Überwachung des dritten Sicherheitsbereichs zu steuern.

Durch das Vorsehen eines dritten Sicherheitsbereichs kann in vorteilhafter Weise effizient eine Kaskade an überwachten Sicherheitsbereichen aufgebaut werden, so dass die konkret zu steuernden Sicherheitsaktionen besser auf die konkret vorliegende Situation abgestimmt und angepasst werden können. Zum Beispiel wird eine Kraftfahrzeuggeschwindigkeit in kleineren Schritten reduziert, wenn sich das die Steuerung der Sicherheitsaktion auslösende Objekt im dritten Sicherheitsbereich befindet verglichen zu dem Fall, in welchem sich das Objekt im zweiten Sicherheitsbereich befindet. Zum Beispiel ist vorgesehen, dass eine Bewegung der sich im dritten Sicherheitsbereich befindlichen Objekte prädiziert wird.

Nach einer weiteren Ausführungsform ist vorgesehen, dass zumindest einer der bestimmten Sicherheitsbereiche (zum Beispiel der erste und/oder der zweite und/oder der dritte Sicherheitsbereich) unterschiedliche Formen aufweist. Insbesondere weisen alle bestimmten Sicherheitsbereiche unterschiedliche Formen auf.

Dadurch wird insbesondere der technische Vorteil bewirkt, dass je nach konkretem Kraftfahrzeugumfeld dieses effizient mittels der Sicherheitsbereiche abgedeckt und überwacht werden kann.

Die Formen, die die bestimmten Sicherheitsbereiche aufweisen können, sind zum Beispiel folgende Formen: rund, oval, rechteckig, kurvig oder gekrümmt. Mit kurvig oder gekrümmt ist eine Form gemeint, die an eine Kurve angepasst ist. Bei der Kurve handelt es sich um eine vom Kraftfahrzeug durchzufahrende Kurve.

Das heißt also insbesondere, dass das Bestimmen derart durchgeführt wird, dass zumindest einer, insbesondere mehrere oder alle, der bestimmten Sicherheitsbereiche unterschiedliche Formen aufweisen. Das heißt also insbesondere, dass die Bestimmungseinrichtung entsprechend ausgebildet ist, die Sicherheitsbereiche derart zu bestimmen, dass zumindest einer der bestimmten Sicherheitsbereiche, insbesondere alle Sicherheitsbereiche, unterschiedliche Formen aufweisen.

Nach einer weiteren Ausführungsform ist vorgesehen, dass einer oder mehrere der bestimmten Sicherheitsbereiche (zum Beispiel der erste und/oder der zweite und/oder der dritte Sicherheitsbereich) um das Kraftfahrzeug gelegt sind. Insbesondere sind alle Sicherheitsbereiche um das Kraftfahrzeug gelegt.

Dadurch wird insbesondere der technische Vorteil bewirkt, dass das Umfeld des Kraftfahrzeugs effizient überwacht werden kann.

Das heißt also insbesondere, dass das Bestimmen derart durchgeführt wird, dass einer oder mehrere, insbesondere alle, der bestimmten Sicherheitsbereiche um das Kraftfahrzeug gelegt sind. Insbesondere heißt das, dass die Bestimmungseinrichtung ausgebildet ist, die Sicherheitsbereiche derart zu bestimmen, dass einer oder mehrere, insbesondere alle, der bestimmten Sicherheitsbereiche um das Kraftfahrzeug gelegt sind.

Ein Parkplatz im Sinne der vorliegenden Erfindung kann auch als eine Parkfläche bezeichnet werden und dient als Abstellfläche für Kraftfahrzeuge. Der Parkplatz bildet insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz ist nach einer Ausführungsform als ein Parkhaus ausgebildet. Der Parkplatz ist nach einer Ausführungsform als eine Parkgarage ausgebildet.

Nach einer Ausführungsform fährt das Kraftfahrzeug fahrer- oder führerlos. Zum Beispiel fährt das Kraftfahrzeug fahrer- oder führerlos innerhalb eines Parkplatzes.

Eine fahrer- oder führerlose Fahrt des Kraftfahrzeugs umfasst, dass das Kraftfahrzeug ferngesteuert wird. Eine fahrer- oder führerlose Fahrt des Kraftfahrzeugs umfasst nach einer Ausführungsform, dass das Kraftfahrzeug autonom, also selbständig, fährt. Bei einer autonomen Fahrt des Kraftfahrzeugs ist nach einer Ausführungsform vorgesehen, dass das Kraftfahrzeug hierbei zumindest teilweise unterstützt, also assistiert, wird. Das heißt, dass dem Kraftfahrzeug zum Beispiel bei seiner autonomen Fahrt assistiert werden kann respektive wird. Ein solches Assistieren umfasst zum Beispiel, dass dem Kraftfahrzeug Fahrdaten über ein Kommunikationsnetzwerk gesendet werden, basierend auf welchen das Kraftfahrzeug autonom fahren kann. Solche Daten umfassen zum Beispiel Kartendaten einer digitalen Karte des Parkplatzes, Solltrajektoriendaten einer vom Kraftfahrzeug abzufahrenden Soll-Trajektorie, Zielpositionsdaten einer vom Kraftfahrzeug anzufahrenden Zielposition innerhalb des Parkplatzes.

Nach einer Ausführungsform führt das Kraftfahrzeug einen automatischen Parkvorgang innerhalb des Parkplatzes durch. Das heißt, dass die Fahrt des Kraftfahrzeugs von einem automatischen Parkvorgang umfasst ist. Ein solch automatischer Parkvorgang kann auch als ein AVP-Vorgang bezeichnet werden. "AVP" steht für "Automated Valet Parking" und kann mit automatischer Parkvorgang übersetzt werden.

Im Rahmen eines solchen AVP-Vorgangs fährt das Kraftfahrzeug automatisch (ferngesteuert oder autonom oder eine Teilstrecke autonom und eine weitere Teilstrecke ferngesteuert) innerhalb eines Parkplatzes, um an einer Parkposition zu parken. Das heißt, dass im Rahmen eines AVP-Vorgangs zum Beispiel vorgesehen ist, dass das Kraftfahrzeug automatisch von einer Abgabeposition, an welcher ein Fahrer des Kraftfahrzeugs das Kraftfahrzeug für die Durchführung eines AVP-Vorgangs abgestellt hat, zu einer Parkposition fährt und sich dort automatisch abstellt. Ein AVP-Vorgang umfasst nach einer Ausführungsform, dass das Kraftfahrzeug automatisch von einer Parkposition zu einer Abholposition fährt und sich dort automatisch abstellt, an welcher eine Person das Kraftfahrzeug wieder übernehmen kann.

Im Rahmen einer fahrer- oder führerlosen Fahrt muss sich somit kein menschlicher Fahrer mehr im Kraftfahrzeug selbst befinden, um das Kraftfahrzeug zu führen.

Objekte im Sinne der vorliegenden Erfindung sind zum Beispiel weitere Kraftfahrzeuge, Tiere, Menschen oder stationäre Infrastrukturelemente.

Nach einer anderen Ausführungsform ist vorgesehen, dass die Steuerungseinrichtung ausgebildet ist, eine Fernsteuerung der einen Sicherheitsaktion oder von einer oder mehreren der mehreren Sicherheitsaktionen zu steuern.

Nach einer anderen Ausführungsform ist vorgesehen, dass die Überwachungseinrichtung ausgebildet ist, Umfelddaten auf ein sich in den jeweiligen Sicherheitsbereich bewegendes Objekt und/oder ein sich innerhalb des jeweiligen Sicherheitsbereichs befindliches Objekt zu analysieren, wobei die Umfelddaten mittels eines oder mehrerer Umfeldsensoren bereitgestellt wurden, die den jeweiligen Sicherheitsbereich erfasst haben, wobei der oder die Umfeldsensoren vom Kraftfahrzeug umfasst und/oder im Kraftfahrzeugumfeld des Kraftfahrzeugs angeordnet sind.

In einer Ausführungsform ist vorgesehen, dass eine jeweilige Form des oder der Sicherheitsbereiche abhängig von einer momentanen und/oder zukünftigen Kraftfahrzeuggeschwindigkeit und/oder abhängig von einem momentanen und/oder zukünftigen Kraftfahrzeugort geändert wird.

In einer Ausführungsform ist vorgesehen, dass die Bestimmungseinrichtung ausgebildet ist, eine jeweilige Form des oder der Sicherheitsbereiche abhängig von einer momentanen und/oder zukünftigen Kraftfahrzeuggeschwindigkeit und/oder abhängig von einem momentanen und/oder zukünftigen Kraftfahrzeugort zu ändern.

Die Sicherheitsbereiche können sich also dynamisch über die Zeit oder den Ort ändern. Dadurch kann in vorteilhafter Weise eine effiziente Überwachung des relevanten Kraftfahrzeugumfelds durchgeführt werden.

Die Formulierung "respektive" umfasst insbesondere die Formulierung "und/oder".

Merkmale, die im Zusammenhang mit einem der Sicherheitsbereiche beschrieben sind, gelten insbesondere analog für die anderen Sicherheitsbereiche.

Die Erfindung wird im Folgenden anhand von bevorzugten Ausführungsbeispielen näher erläutert. Hierbei zeigen
- Fig. 1: ein Ablaufdiagramm eines Verfahrens zum Verringern eines Kollisionsrisikos einer Kollision eines Kraftfahrzeugs mit einem Objekt,
- Fig. 2: eine Vorrichtung zum Verringern eines Kollisionsrisikos einer Kollision eines Kraftfahrzeugs mit einem Objekt,
- Fig. 3: ein Kraftfahrzeug,
- Fig. 4: einen Parkplatz und
- Fig. 5: das Kraftfahrzeug der Fig. 3 während einer Fahrt innerhalb eines Parkplatzes.

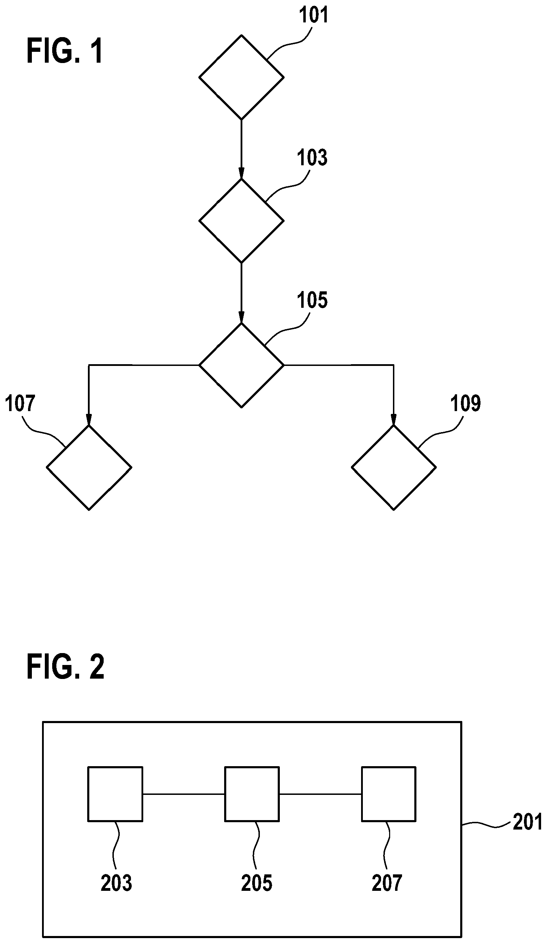

Fig. 1 zeigt ein Ablaufdiagramm eines Verfahrens zum Verringern eines Kollisionsrisikos einer Kollision eines fahrenden Kraftfahrzeugs mit einem Objekt.

Das Verfahren umfasst die folgenden Schritte:
- Bestimmen 101 eines ersten Sicherheitsbereichs, der einen ersten abgegrenzten Teilbereich eines momentanen Umfelds des fahrenden Kraftfahrzeugs festlegt,
- Bestimmen 103 eines zweiten Sicherheitsbereichs, der einen zweiten abgegrenzten Teilbereich des momentanen Umfelds des fahrenden Kraftfahrzeugs festlegt, wobei der zweite Teilbereich zum Kraftfahrzeug weiter beabstandet ist als der erste Teilbereich,
- Überwachen 105 des ersten und des zweiten Teilbereichs auf ein sich in den jeweiligen Sicherheitsbereich bewegendes Objekt und/oder auf ein sich innerhalb des jeweiligen Sicherheitsbereichs befindliches Objekt,
- Steuern 107 eines Anhaltens des Kraftfahrzeugs, wenn die Überwachung ergeben hat, dass sich ein Objekt innerhalb des ersten Sicherheitsbereichs befindet, um das Kraftfahrzeug anzuhalten, und
- Steuern 109 einer Durchführung einer oder mehrerer der folgenden Sicherheitsaktionen, wenn die Überwachung ergeben hat, dass sich ein Objekt innerhalb des zweiten Sicherheitsbereichs befindet: Reduzieren einer momentanen Kraftfahrzeuggeschwindigkeit, Vorbereiten einer Bremsanlage des Kraftfahrzeugs auf eine Bremsung, Überprüfen der durchgeführten Überwachung des zweiten Sicherheitsbereichs.

Fig. 2 zeigt eine Vorrichtung 201 zum Verringern eines Kollisionsrisikos einer Kollision eines fahrenden Kraftfahrzeugs mit einem Objekt.

Die Vorrichtung 201 umfasst:
- eine Bestimmungseinrichtung 203 zum Bestimmen eines ersten Sicherheitsbereichs, der einen ersten abgegrenzten Teilbereich eines momentanen Umfelds des fahrenden Kraftfahrzeugs festlegt, und
- zum Bestimmen eines zweiten Sicherheitsbereichs, der einen zweiten abgegrenzten Teilbereich des momentanen Umfelds des fahrenden Kraftfahrzeugs festlegt, wobei der zweite Teilbereich zum Kraftfahrzeug weiter beabstandet ist als der erste Teilbereich,
- eine Überwachungseinrichtung 205 zum Überwachen des ersten und des zweiten Teilbereichs auf ein sich in den jeweiligen Sicherheitsbereich bewegendes Objekt und/oder auf ein sich innerhalb des jeweiligen Sicherheitsbereichs befindliches Objekt,
- eine Steuerungseinrichtung 207 zum Steuern eines Anhaltens des Kraftfahrzeugs, wenn die Überwachung ergeben hat, dass sich ein Objekt innerhalb des ersten Sicherheitsbereichs befindet, um das Kraftfahrzeug anzuhalten, und
- zum Steuern einer Durchführung einer oder mehrerer der folgenden Sicherheitsaktionen, wenn die Überwachung ergeben hat, dass sich ein Objekt innerhalb des zweiten Sicherheitsbereichs befindet: Reduzieren einer momentanen Kraftfahrzeuggeschwindigkeit, Vorbereiten einer Bremsanlage des Kraftfahrzeugs auf eine Bremsung, Überprüfen der durchgeführten Überwachung des zweiten Sicherheitsbereichs.

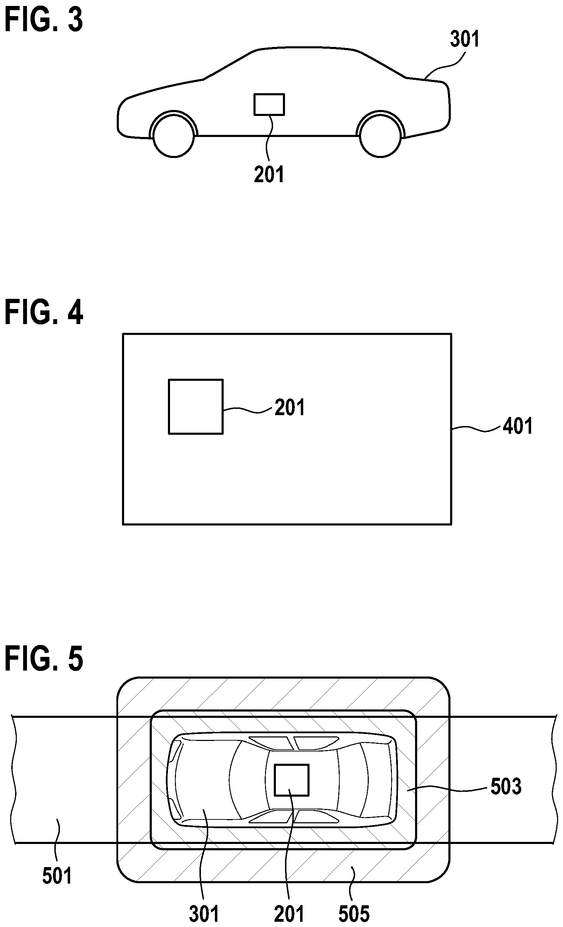

Fig. 3 zeigt ein Kraftfahrzeug 301 umfassend die Vorrichtung 201 der Fig. 2. Der Übersicht halber sind die Elemente 203, 205, 207 nicht gezeigt.

Das Kraftfahrzeug 301 umfasst zum Beispiel einen oder mehrere Umfeldsensoren. Das Kraftfahrzeug 301 umfasst zum Beispiel eine Kommunikationsschnittstelle zur Kommunikation über ein Kommunikationsnetzwerk. Mittels der Kommunikationsschnittstelle kann das Kraftfahrzeug 301 zum Beispiel Fernsteuerungsbefehle empfangen.

Fig. 4 zeigt einen Parkplatz 401 für Kraftfahrzeuge.

Der Parkplatz 401 umfasst die Vorrichtung 201 der Fig. 2. Der Übersicht halber sind die Elemente 203, 205, 207 nicht gezeigt.

Nach einer Ausführungsform umfasst der Parkplatz 401 einen oder mehrere Umfeldsensoren. Nach einer Ausführungsform umfasst der Parkplatz 401 eine Kommunikationsschnittstelle zur Kommunikation über ein Kommunikationsnetzwerk. Mittels der Kommunikationsschnittstelle ist es zum Beispiel ermöglicht, Fernsteuerungsbefehle an ein Kraftfahrzeug zu senden.

Nach einer Ausführungsform ist ein Parkplatzverwaltungssystem vorgesehen, welches ausgebildet ist, einen Betrieb des Parkplatzes zu steuern. Das Parkplatzverwaltungssystem umfasst zum Beispiel die Vorrichtung 201. Das Parkplatzverwaltungssystem steuert zum Beispiel einen AVP-Vorgang für ein Kraftfahrzeug.

Fig. 5 zeigt das Kraftfahrzeug 301 der Fig. 3 bei einer Fahrt auf einer Fahrbahn 501. Die Fahrbahn 501 ist von einem Parkplatz (nicht weiter im Detail gezeigt) umfasst. Zum Beispiel ist die Fahrbahn 501 vom Parkplatz 401 der Fig. 4 umfasst.

Mittels der Bestimmungseinrichtung 203 werden zwei Sicherheitsbereiche bestimmt: einen ersten Sicherheitsbereich 503 und einen zweiten Sicherheitsbereich 505, die jeweils einen abgegrenzten Teilbereich des momentanen Umfelds des Kraftfahrzeugs 301 festlegen. Hierbei ist der zweite Sicherheitsbereich 505 weiter beabstandet vom Kraftfahrzeug 301 als der erste Sicherheitsbereich 503.

Beide Sicherheitsbereiche 503, 505 sind derart bestimmt, dass diese um das Kraftfahrzeug 301 gelegt sind. Das heißt also, dass die beiden Sicherheitsbereiche 503, 505 das Kraftfahrzeug 301 umlaufen oder umschließen.

In der in Fig. 5 gezeigten Anordnung sind beide Sicherheitsbereiche 503, 505 rechteckförmig ausgebildet. Das heißt also, dass die beiden Sicherheitsbereiche 503, 505 jeweils eine Rechteckform aufweisen.

In weiteren nicht gezeigten Ausführungsbeispielen ist vorgesehen, dass der erste Sicherheitsbereich 503 und/oder der zweite Sicherheitsbereich 505 eine Ovalform respektive eine Kreisform aufweisen. Eine jeweilige Form der beiden Sicherheitsbereiche 503, 505 ist nach einer weiteren nicht gezeigten Ausführungsform unterschiedlich.

Nach einer Ausführungsform umfasst das Bestimmen des ersten und/oder zweiten Sicherheitsbereichs 503, 505, dass diese auf eine vom Kraftfahrzeug 301 abzufahrende Soll-Trajektorie angepasst werden. Nach einer Ausführungsform ist vorgesehen, dass die beiden Sicherheitsbereiche 503, 505 parallel oder nicht parallel zueinander verlaufen. In einer weiteren Ausführungsform ist vorgesehen, dass der erste Sicherheitsbereich 503 rechteckförmig ist, wobei der zweite Sicherheitsbereich 505 auf die vom Kraftfahrzeug 301 abzufahrende Soll-Trajektorie ausgerichtet ist.

Die beiden Sicherheitsbereiche 503, 505 werden, wie vorstehend beschrieben, mittels eines oder mehrerer Umfeldsensoren überwacht. Hierbei ist zum Beispiel vorgesehen, dass die Umfeldsensoren des Kraftfahrzeugs 301 die beiden Bereiche 503, 505 überwachen. Das heißt, dass diese Umfeldsensoren die beiden Sicherheitsbereiche 503, 505 erfassen und der Erfassung entsprechend Umfelddaten ermitteln. Diese Umfelddaten werden dann einer Umfeldanalyse unterzogen.

Analog, also insbesondere zusätzlich oder anstelle, wird die Überwachung mittels eines oder mehrerer Umfeldsensoren durchgeführt, die vom Parkplatz umfasst sind, die also allgemein innerhalb des Parkplatzes angeordnet sind. Nach einer Ausführungsform ist vorgesehen, dass sowohl im Kraftfahrzeug selbst die beiden Sicherheitsbereiche bestimmt und entsprechend überwacht werden. Gleichzeitig ist nach dieser Ausführungsform vorgesehen, dass auch kraftfahrzeugextern mittels einer entsprechenden Vorrichtung des Parkplatzes entsprechend die Sicherheitsbereiche bestimmt sowie überwacht werden. Die Ergebnisse beider Überwachungen werden dann nach einer Ausführungsform verwendet, um die Durchführung der einen oder der mehreren Sicherheitsaktionen zu steuern. Die Steuerungseinrichtung ist nach einer Ausführungsform ausgebildet, Ergebnisse einer kraftfahrzeuginternen und einer kraftfahrzeugexternen Überwachung zu verwenden, um die Durchführung der einen oder mehreren Sicherheitsaktionen zu steuern.

Zusammenfassend stellt die Erfindung insbesondere ein effizientes technisches Konzept bereit, basierend auf welchem ein Kollisionsrisiko einer Kollision eines Kraftfahrzeugs mit einem Objekt effizient verringert werden kann.

Ein erfindungsgemäßer Grundgedanke ist insbesondere darin zu sehen, dass mittels mehrerer dynamischer Sicherheitsbereiche geprüft wird, ob sich ein Objekt (Kraftfahrzeug, Mensch, Tier) sich dem Kraftfahrzeug nähert respektive in dessen Fahrweg sich aufhält respektive sich in dessen Fahrweg bewegt. Das heißt also, dass erfindungsgemäß vorgesehen ist, mindestens zwei Sicherheitsbereiche, insbesondere drei oder mehr Sicherheitsbereiche, zu bestimmen oder zu definieren, die zum Beispiel mittels eines Umfeldsensors oder mittels mehrerer Umfeldsensoren abgetastet oder erfasst oder überwacht werden.

Erfindungsgemäß und Bezug nehmend auf die Fig. 5 ist vorgesehen, dass der zweite Sicherheitsbereich 505 überwacht wird, ob sich ein Objekt dem Kraftfahrzeug 301 nähert. Es wird zum Beispiel daraufhin geprüft, ob sich dieses Objekt bereits zu nah genähert hat (einen vorgegebenen Mindestabstand unterschritten hat) respektive sich weiter in den Fahrweg des Kraftfahrzeugs bewegen wird (Prädiktion). Des Weiteren ist erfindungsgemäß vorgesehen, dass eine oder mehrere der folgenden Maßnahmen (Sicherheitsaktionen) zur Vorbeugung eingeleitet und durchgeführt werden:
- eine Kraftfahrzeuggeschwindigkeit wird reduziert,
- eine Bremsanlage des Kraftfahrzeugs wird auf eine Bremsung vorbereitet,
- eine Umfeldanalyse wird noch mal angestoßen (Überprüfung, also nochmaliges Prüfen, der Überwachung des zweiten Sicherheitsbereichs 505. Dies insbesondere speziell auf das detektierte Objekt bezogen, zum Beispiel kann auf das Objekt fokussiert werden. Zum Beispiel kann ein anderes Umfeldmodell für die Umfeldanalyse verwendet werden).

Sofern das Objekt sich bereits im ersten Sicherheitsbereich 503 befindet, wird aufgrund der Nähe des Objekts zum Kraftfahrzeug 301 sofort ein Notstopp zur Sicherheit eingeleitet, das heißt, dass das Kraftfahrzeug angehalten wird.

Das erfindungsgemäße Konzept ist insbesondere auf mehr als zwei Sicherheitsbereiche anpassbar und ist auch für mehr als zwei Sicherheitsbereiche so vorgesehen.

Die Form der Sicherheitsbereiche ist zum Beispiel eine Rechteckform. Zum Beispiel ist diese eine runde Form oder eine Ovalform. Zum Beispiel sind die jeweiligen Formen der Sicherheitsbereiche, analog zum adaptiven Fernlicht oder adaptiven Abblendlicht, auf eine vom Kraftfahrzeug abzufahrende Soll-Trajektorie angepasst.

In einer weiteren Ausführungsform unterscheiden sich die Formen der Sicherheitsbereiche. Zum Beispiel verlaufen diese nicht mehr zueinander zumindest teilweise parallel. Zum Beispiel ist der erste Sicherheitsbereich rechteckförmig um das Fahrzeug, wobei der zweite Sicherheitsbereich zum Beispiel auf eine vom Kraftfahrzeug abzufahrende Soll-Trajektorie ausgerichtet ist.

Eine Überwachung der Sicherheitsbereiche wird nach einer Ausführungsform von einem oder mehreren Umfeldsensoren durchgeführt. Insbesondere werden mehrere Umfeldsensoren verwendet, die zum Beispiel von Sensorsystemen jeweils umfasst sein können. Dabei sind die Umfeldsensoren entweder alle im Kraftfahrzeug oder alle vom Parkplatz (von einer Parkplatzverwaltungsüberwachungsinfrastruktur umfasst) oder sowohl vom Kraftfahrzeug als auch von der Parkplatzverwaltungsüberwachungsinfrastruktur umfasst.

Auch ist es nach einer Ausführungsform vorgesehen, dass jeweils von der Vorrichtung des Kraftfahrzeugs als auch von der Vorrichtung des Parkplatzes getrennt voneinander entsprechende erste und zweite Sicherheitsbereiche bestimmt und überwacht werden.

## Patentansprüche

1. Verfahren zum Verringern eines Kollisionsrisikos einer Kollision eines fahrenden Kraftfahrzeugs (301) mit einem Objekt, umfassend die folgenden Schritte:
- Bestimmen (101) eines ersten Sicherheitsbereichs (503), der einen ersten abgegrenzten Teilbereich eines momentanen Umfelds des fahrenden Kraftfahrzeugs (301) festlegt,
- Bestimmen (103) eines zweiten Sicherheitsbereichs (505), der einen zweiten abgegrenzten Teilbereich des momentanen Umfelds des fahrenden Kraftfahrzeugs (301) festlegt, wobei der zweite Teilbereich zum Kraftfahrzeug (301) weiter beabstandet ist als der erste Teilbereich,
- Überwachen (105) des ersten und des zweiten Teilbereichs auf ein sich in den jeweiligen Sicherheitsbereich bewegendes Objekt und/oder auf ein sich innerhalb des jeweiligen Sicherheitsbereichs befindliches Objekt,
- Steuern (107) eines Anhaltens des Kraftfahrzeugs (301), wenn die Überwachung ergeben hat, dass sich ein Objekt innerhalb des ersten Sicherheitsbereichs (503) befindet, um das Kraftfahrzeug (301) anzuhalten, und
- Steuern (109) einer Durchführung einer oder mehrerer der folgenden Sicherheitsaktionen, wenn die Überwachung ergeben hat, dass sich ein Objekt innerhalb des zweiten Sicherheitsbereichs (505) befindet: Reduzieren einer momentanen Kraftfahrzeuggeschwindigkeit, Vorbereiten einer Bremsanlage des Kraftfahrzeugs (301) auf eine Bremsung, Überprüfen der durchgeführten Überwachung des zweiten Sicherheitsbereichs (505),
- **dadurch gekennzeichnet, dass** bei einer Detektion eines sich innerhalb des zweiten Sicherheitsbereichs (505) befindlichen Objekts eine Bewegung des detektierten Objekts prädiziert wird, wobei die eine oder die mehreren Sicherheitsaktionen nur dann durchgeführt werden, wenn die Prädiktion ergeben hat, dass sich das detektierte Objekt dem Kraftfahrzeug (301) nähern wird und/oder sich in den ersten Sicherheitsbereich (503) bewegen wird.

2. Verfahren nach Anspruch 1, wobei ein dritter Sicherheitsbereich bestimmt wird, der einen dritten abgegrenzten Teilbereich des momentanen Umfelds des Kraftfahrzeugs (301) festlegt, wobei der dritte Teilbereich zum Kraftfahrzeug (301) weiter beabstandet ist als der zweite Teilbereich, wobei der dritte Teilbereich auf ein sich in den dritten Sicherheitsbereich bewegendes Objekt und/oder auf ein sich innerhalb des dritten Sicherheitsbereichs befindliches Objekt überwacht wird, wobei die Durchführung der einen oder der mehreren der Sicherheitsaktionen abhängig von der Überwachung des dritten Sicherheitsbereichs durchgeführt wird.

3. Verfahren nach einem der vorherigen Ansprüche, wobei zumindest einer der bestimmten Sicherheitsbereiche unterschiedliche Formen aufweist.

4. Verfahren nach einem der vorherigen Ansprüche, wobei zumindest einige der bestimmten Sicherheitsbereiche um das Kraftfahrzeug (301) gelegt sind.

5. Verfahren nach einem der vorherigen Ansprüche, wobei eine jeweilige Form des oder der Sicherheitsbereiche abhängig von einer momentanen und/oder zukünftigen Kraftfahrzeuggeschwindigkeit und/oder abhängig von einem momentanen und/oder zukünftigen Kraftfahrzeugort geändert wird.

6. Verfahren nach einem der vorherigen Ansprüche, wobei sowohl im Kraftfahrzeug selbst die Sicherheitsbereiche bestimmt und entsprechend überwacht werden, wobei auch kraftfahrzeugextern die Sicherheitsbereiche bestimmt und überwacht werden, wobei Ergebnisse beider Überwachungen verwendet werden, um die Durchführung der einen oder der mehreren Sicherheitsaktionen zu steuern.

7. Vorrichtung (201) zum Verringern eines Kollisionsrisikos einer Kollision eines fahrenden Kraftfahrzeugs (301) mit einem Objekt, umfassend:
- eine Bestimmungseinrichtung (203) zum Bestimmen eines ersten Sicherheitsbereichs (503), der einen ersten abgegrenzten Teilbereich eines momentanen Umfelds des fahrenden Kraftfahrzeugs (301) festlegt, und
- zum Bestimmen eines zweiten Sicherheitsbereichs (505), der einen zweiten abgegrenzten Teilbereich des momentanen Umfelds des fahrenden Kraftfahrzeugs (301) festlegt, wobei der zweite Teilbereich zum Kraftfahrzeug (301) weiter beabstandet ist als der erste Teilbereich,
- eine Überwachungseinrichtung (205) zum Überwachen des ersten und des zweiten Teilbereichs auf ein sich in den jeweiligen Sicherheitsbereich bewegendes Objekt und/oder auf ein sich innerhalb des jeweiligen Sicherheitsbereichs befindliches Objekt, und
- eine Steuerungseinrichtung (207) zum Steuern eines Anhaltens des Kraftfahrzeugs (301), wenn die Überwachung ergeben hat, dass sich ein Objekt innerhalb des ersten Sicherheitsbereichs (503) befindet, um das Kraftfahrzeug (301) anzuhalten, und
- zum Steuern einer Durchführung einer oder mehrerer der folgenden Sicherheitsaktionen, wenn die Überwachung ergeben hat, dass sich ein Objekt innerhalb des zweiten Sicherheitsbereichs (505) befindet: Reduzieren einer momentanen Kraftfahrzeuggeschwindigkeit, Vorbereiten einer Bremsanlage des Kraftfahrzeugs (301) auf eine Bremsung, Überprüfen der durchgeführten Überwachung des zweiten Sicherheitsbereichs (505),
- **dadurch gekennzeichnet, dass** eine Prädiktionseinrichtung vorgesehen ist, die ausgebildet ist, bei einer Detektion eines sich innerhalb des zweiten Sicherheitsbereichs (505) befindlichen Objekts eine Bewegung des detektierten Objekts zu prädizieren, wobei die Steuerungseinrichtung (207) ausgebildet ist, die eine oder die mehreren Sicherheitsaktionen nur dann durchzuführen, wenn die Prädiktion ergeben hat, dass sich das detektierte Objekt dem Kraftfahrzeug (301) nähern wird und/oder sich in den ersten Sicherheitsbereich (503) bewegen wird.

8. Vorrichtung (201) nach Anspruch 7, wobei die Bestimmungseinrichtung (203) ausgebildet ist, einen dritten Sicherheitsbereich zu bestimmen, der einen dritten abgegrenzten Teilbereich des momentanen Umfelds des Kraftfahrzeugs (301) festlegt, wobei der dritte Teilbereich zum Kraftfahrzeug (301) weiter beabstandet ist als der zweite Teilbereich, wobei die Überwachungseinrichtung (205) ausgebildet ist, den dritten Teilbereich auf ein sich in den dritten Sicherheitsbereich bewegendes Objekt und/oder auf ein sich innerhalb des dritten Sicherheitsbereichs befindliches Objekt zu überwachen, wobei die Steuerungseinrichtung (207) ausgebildet ist, die Durchführung der einen oder der mehreren der Sicherheitsaktionen abhängig von der Überwachung des dritten Sicherheitsbereichs zu steuern.

9. Vorrichtung (201) nach Anspruch 7 oder 8, wobei zumindest einer der bestimmten Sicherheitsbereiche unterschiedliche Formen aufweist.

10. Vorrichtung (201) nach einem der Ansprüche 7 bis 9, wobei zumindest einige der bestimmten Sicherheitsbereiche um das Kraftfahrzeug (301) gelegt sind.

11. Vorrichtung (201) nach einem der Ansprüche 7 bis 10, wobei die Bestimmungseinrichtung (203) ausgebildet ist, eine jeweilige Form des oder der Sicherheitsbereiche abhängig von einer momentanen und/oder zukünftigen Kraftfahrzeuggeschwindigkeit und/oder abhängig von einem momentanen und/oder zukünftigen Kraftfahrzeugort zu ändern.

12. Vorrichtung (201) nach einem der Ansprüche 7 bis 11, wobei die Steuerungseinrichtung (207) ausgebildet ist, Ergebnisse einer kraftfahrzeuginternen und einer kraftfahrzeugexternen Überwachung zu verwenden, um die Durchführung der einen oder mehreren Sicherheitsaktionen zu steuern.

13. Kraftfahrzeug (301), umfassend die Vorrichtung (201) nach einem der Ansprüche 7 bis 12.

14. Parkplatz (401) für Kraftfahrzeuge (301), umfassend die Vorrichtung (201) nach einem der Ansprüche 7 bis 12.

15. Computerprogramm, umfassend Programmcode zur Durchführung des Verfahrens nach einem der Ansprüche 1 bis 6, wenn das Computerprogramm auf einem Computer ausgeführt wird.

## Claims

1. Method for reducing a risk of a collision between a moving motor vehicle (301) and an object, comprising the following steps of:
- determining (101) a first safety area (503) which defines a first delimited section of a current environment of the moving motor vehicle (301),
- determining (103) a second safety area (505) which defines a second delimited section of the current environment of the moving motor vehicle (301), wherein the second section is further away from the motor vehicle (301) than the first section,
- monitoring (105) the first and second sections for an object moving into the respective safety area and/or for an object located inside the respective safety area,
- controlling (107) stopping of the motor vehicle (301), if the monitoring has revealed that an object is located inside the first safety area (503), in order to stop the motor vehicle (301), and
- controlling (109) performance of one or more of the following safety actions if the monitoring has revealed that an object is located inside the second safety area (505): reducing a current motor vehicle speed, preparing a brake system of the motor vehicle (301) for braking, checking the monitoring of the second safety area (505) which has been carried out,
- **characterized in that**, if an object located inside the second safety area (505) is detected, a movement of the detected object is predicted, wherein the one or more safety actions are performed only when the prediction has revealed that the detected object will approach the motor vehicle (301) and/or will move into the first safety area (503) .

2. Method according to Claim 1, wherein a third safety area is determined and defines a third delimited section of the current environment of the motor vehicle (301), wherein the third section is further away from the motor vehicle (301) than the second section, wherein the third section is monitored for an object moving into the third safety area and/or for an object located inside the third safety area, wherein the one or more safety actions are performed on the basis of the monitoring of the third safety area.

3. Method according to one of the preceding claims, wherein at least one of the determined safety areas has different shapes.

4. Method according to one of the preceding claims, wherein at least some of the determined safety areas are around the motor vehicle (301).

5. Method according to one of the preceding claims, wherein a respective shape of the safety area(s) is changed on the basis of a current and/or future motor vehicle speed and/or on the basis of a current and/or future motor vehicle location.

6. Method according to one of the preceding claims, wherein the safety areas are determined and accordingly monitored in the motor vehicle itself, wherein the safety areas are also determined and monitored outside the motor vehicle, wherein results of both monitoring processes are used to control the performance of the one or more safety actions.

7. Device (201) for reducing a risk of a collision between a moving motor vehicle (301) and an object, comprising:
- a determination device (203) for determining a first safety area (503) which defines a first delimited section of a current environment of the moving motor vehicle (301), and
- for determining a a second safety area (505) which defines a second delimited section of the current environment of the moving motor vehicle (301), wherein the second section is further away from the motor vehicle (301) than the first section,
- a monitoring device (205) for monitoring the first and second sections for an object moving into the respective safety area and/or for an object located inside the respective safety area, and
- a control device (207) for controlling stopping of the motor vehicle (301), if the monitoring has revealed that an object is located inside the first safety area (503), in order to stop the motor vehicle (301), and
- for controlling performance of one or more of the following safety actions if the monitoring has revealed that an object is located inside the second safety area (505): reducing a current motor vehicle speed, preparing a brake system of the motor vehicle (301) for braking, checking the monitoring of the second safety area (505) which has been carried out,
- **characterized in that** provision is made of a prediction device which is designed, if an object located inside the second safety area (505) is detected, to predict a movement of the detected object, wherein the control device (207) is designed to perform the one or more safety actions only when the prediction has revealed that the detected object will approach the motor vehicle (301) and/or will move into the first safety area (503).

8. Device (201) according to Claim 7, wherein the determination device (203) is designed to determine a third safety area which defines a third delimited section of the current environment of the motor vehicle (301), wherein the third section is further away from the motor vehicle (301) than the second section, wherein the monitoring device (205) is designed to monitor the third section for an object moving into the third safety area and/or for an object located inside the third safety area, wherein the control device (207) is designed to control the performance of the one or more safety actions on the basis of the monitoring of the third safety area.

9. Device (201) according to Claim 7 or 8, wherein at least one of the determined safety areas different shapes.

10. Device (201) according to one of Claims 7 to 9, wherein at least some of the determined safety areas are around the motor vehicle (301).

11. Device (201) according to one of Claims 7 to 10, wherein the determination device (203) is designed to change a respective shape of the safety area(s) on the basis of a current and/or future motor vehicle speed and/or on the basis of a current and/or future motor vehicle location.

12. Device (201) according to one of Claims 7 to 11, wherein the control device (207) is designed to use results of a monitoring process inside the motor vehicle and of a monitoring process outside the motor vehicle to control the performance of the one or more safety actions.

13. Motor vehicle (301) comprising the device (201) according to one of Claims 7 to 12.

14. Parking area (401) for motor vehicles (301), comprising the device (201) according to one of Claims 7 to 12.

15. Computer program, comprising program code for carrying out the method according to any of Claims 1 to 6 when the computer program is executed on a computer.

## Revendications

1. Procédé pour réduire un risque de collision d'un véhicule automobile en mouvement (301) avec un objet, comprenant les étapes suivantes :
- déterminer (101) une première zone de sécurité (503) définissant une première sous-zone délimitée d'un environnement actuel du véhicule automobile en mouvement (301),
- déterminer (103) une deuxième zone de sécurité (505) qui définit une deuxième sous-zone délimitée de l'environnement actuel du véhicule automobile (301) en mouvement, la deuxième sous-zone étant plus éloignée du véhicule automobile (301) que la première sous-zone,
- surveiller (105) la première et la deuxième sous-zones en ce qui concerne un objet se déplaçant dans la zone de sécurité respective et/ou un objet se trouvant à l'intérieur de la zone de sécurité respective,
- commander (107) l'arrêt du véhicule automobile (301) lorsque la surveillance a révélé qu'un objet se trouve à l'intérieur de la première zone de sécurité (503), afin d'arrêter le véhicule automobile (301), et
commander (109) l'exécution d'une ou plusieurs des actions de sécurité suivantes si la surveillance a révélé qu'un objet se trouve à l'intérieur de la deuxième zone de sécurité (505) : réduire une vitesse actuelle du véhicule automobile, préparer un système de freinage du véhicule automobile (301) à un freinage, vérifier la surveillance effectuée de la deuxième zone de sécurité (505),
- **caractérisé en ce que**, lorsqu'un objet situé à l'intérieur de la deuxième zone de sécurité (505) est détecté, un mouvement de l'objet détecté est prédit, l'action ou les actions de sécurité n'étant exécutées que si la prédiction a montré que l'objet détecté va s'approcher du véhicule automobile (301) et/ou se déplace dans la première zone de sécurité (503).

2. Procédé selon la revendication 1, dans lequel il est déterminé une troisième zone de sécurité qui définit une troisième sous-zone délimitée de l'environnement actuel du véhicule automobile (301), la troisième sous-zone étant plus éloignée du véhicule automobile (301) que la deuxième sous-zone, la troisième sous-zone étant surveillée en ce qui concerne un objet qui se déplace dans la troisième zone de sécurité et/ou en ce qui concerne un objet qui se trouve à l'intérieur de la troisième zone de sécurité, l'exécution de l'une ou de plusieurs des actions de sécurité étant effectuée en fonction de la surveillance de la troisième zone de sécurité.

3. Procédé selon l'une des revendications précédentes, dans lequel au moins une des zones de sécurité déterminées présente des formes différentes.

4. Procédé selon l'une des revendications précédentes, dans lequel au moins certaines des zones de sécurité déterminées sont situées autour du véhicule automobile (301) .

5. Procédé selon l'une des revendications précédentes, dans lequel une forme respective de la ou des zones de sécurité est modifiée en fonction d'une vitesse instantanée et/ou future du véhicule automobile et/ou en fonction d'une localisation actuelle et/ou future du véhicule automobile.

6. Procédé selon l'une des revendications précédentes, dans lequel les zones de sécurité sont déterminées et surveillées de manière correspondante dans le véhicule automobile lui-même, et les zones de sécurité sont également déterminées et surveillées à l'extérieur du véhicule automobile, les résultats des deux surveillances étant utilisés pour commander l'exécution d'une ou de plusieurs des actions de sécurité.

7. Dispositif (201) pour réduire un risque de collision d'un véhicule automobile en mouvement (301) avec un objet, comprenant :
- un dispositif de détermination (203) pour déterminer une première zone de sécurité (503) qui définit une première sous-zone délimitée d'un environnement actuel du véhicule automobile en mouvement (301), et
- pour déterminer une deuxième zone de sécurité (505) qui définit une deuxième sous-zone délimitée de l'environnement actuel du véhicule automobile (301) en mouvement, la deuxième sous-zone étant plus éloignée du véhicule automobile (301) que la première sous-zone,
- un dispositif de surveillance (205) pour surveiller la première et la deuxième sous-zones en ce qui concerne un objet se déplaçant dans la zone de sécurité respective et/ou en ce qui concerne un objet se trouvant à l'intérieur de la zone de sécurité respective, et
- un moyen de commande (207) pour commander l'arrêt du véhicule automobile (301) lorsque la surveillance a révélé qu'un objet se trouve à l'intérieur de la première zone de sécurité (503), afin d'arrêter le véhicule automobile (301), et
- pour commander l'exécution d'une ou de plusieurs des actions de sécurité suivantes, si la surveillance a révélé qu'un objet se trouve à l'intérieur de la deuxième zone de sécurité (505) : réduire une vitesse actuelle du véhicule automobile, préparer un système de freinage du véhicule automobile (301) à un freinage, vérifier la surveillance effectuée de la deuxième zone de sécurité (505),
- **caractérisé en ce qu'**il est prévu un dispositif de prédiction qui est conçu pour prédire un mouvement de l'objet détecté lors d'une détection d'un objet se trouvant à l'intérieur de la deuxième zone de sécurité (505), le dispositif de commande (207) étant conçu pour n'exécuter une ou plusieurs des actions de sécurité que si la prédiction a montré que l'objet détecté va s'approcher du véhicule automobile (301) et/ou se déplacer dans la première zone de sécurité (503).

8. Dispositif (201) selon la revendication 7, dans lequel le dispositif de détermination (203) est conçu pour déterminer une troisième zone de sécurité qui définit une troisième sous-zone délimitée de l'environnement actuel du véhicule automobile (301), la troisième sous-zone étant plus éloignée du véhicule automobile (301) que la deuxième sous-zone, le dispositif de surveillance (205) étant conçu de façon à surveiller la troisième sous-zone en ce qui concerne un objet se déplaçant dans la troisième zone de sécurité et/ou en ce qui concerne un objet se trouvant à l'intérieur de la troisième zone de sécurité, le dispositif de commande (207) étant conçu pour commander l'exécution d'une ou de plusieurs des actions de sécurité en fonction de la surveillance de la troisième zone de sécurité.

9. Dispositif (201) selon la revendication 7 ou 8, dans lequel au moins une des zones de sécurité déterminées présente des formes différentes.

10. Dispositif (201) selon l'une des revendications 7 à 9, dans lequel au moins certaines des zones de sécurité déterminées sont situées autour du véhicule automobile (301) .

11. Dispositif (201) selon l'une des revendications 7 à 10, le dispositif de détermination (203) étant conçu de façon à modifier une forme respective de la ou des zones de sécurité en fonction d'une vitesse actuelle et/ou future du véhicule automobile et/ou en fonction d'une localisation actuelle et/ou future du véhicule automobile.

12. Dispositif (201) selon l'une des revendications 7 à 11, dans lequel le dispositif de commande (207) est conçu pour utiliser les résultats d'une surveillance interne au véhicule et d'une surveillance externe au véhicule pour commander la mise en œuvre d'une ou plusieurs des actions de sécurité.

13. Véhicule automobile (301) comprenant le dispositif (201) selon l'une des revendications 7 à 12.

14. Parc de stationnement (401) pour véhicules automobiles, comprenant le dispositif (201) selon l'une des revendication 7 à 12.

15. Programme d'ordinateur, comprenant des codes de programme pour mettre en œuvre le procédé selon l'une des revendications 1 à 6 lorsque le programme d'ordinateur est exécuté sur un ordinateur.
